(19) **Europäisches Patentamt European Patent Office Office européen des brevets**

(11) **EP 3 974 273 B1**

(12) **EUROPEAN PATENT SPECIFICATION**

(45) Date of publication and mention
of the grant of the patent:
**17.01.2024 Bulletin 2024/03**

(21) Application number: **21198352.3**

(22) Date of filing: **22.09.2021**

(51) International Patent Classification (IPC):
***B60W 30/14*** *(2006.01)* ***B60W 50/08*** *(2020.01)*

(52) Cooperative Patent Classification (CPC):
**B60W 30/146; B60W 50/082;** B60W 2300/36;
B60W 2520/10; B60W 2520/18; B60W 2540/10;
B60W 2540/215; B60W 2710/0672; B60W 2710/10;
B60W 2710/105; B60W 2710/1055

(54) **MOTORCYCLE**

MOTORRAD

MOTO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.09.2020 JP 2020159640**

(43) Date of publication of application:
**30.03.2022 Bulletin 2022/13**

(73) Proprietor: **Yamaha Hatsudoki Kabushiki Kaisha
Iwata-shi, Shizuoka 438-8501 (JP)**

(72) Inventor: **KATO, Akikazu
438-8501 Iwata-shi (JP)**

(74) Representative: **Studio Torta S.p.A. et al
Via Viotti, 9
10121 Torino (IT)**

(56) References cited:
EP-A1- 2 857 301 EP-A2- 2 138 367
DE-A1-102015 220 658 US-A1- 2012 067 122
US-A1- 2020 207 205

## Description

TECHNICAL FIELD

The present invention relates to a motorcycle capable of executing vehicle speed control that at least prevents vehicle speed from exceeding set vehicle speed.

BACKGROUND ART

Conventionally, vehicles that perform vehicle speed control that at least prevents vehicle speed from exceeding set vehicle speed have been known. For example, as disclosed in Japanese Patent Application Publication No. 2007-100639, vehicles that include a speed limiter that limits vehicle speed such that the vehicle speed does not exceed an upper limit have been known. Moreover, vehicles that perform control, such as a so-called cruise control, to control an engine torque such that vehicle speed is kept at a constant value set by a user have been known.

SUMMARY OF THE INVENTION

TECHNICAL PROBLEM

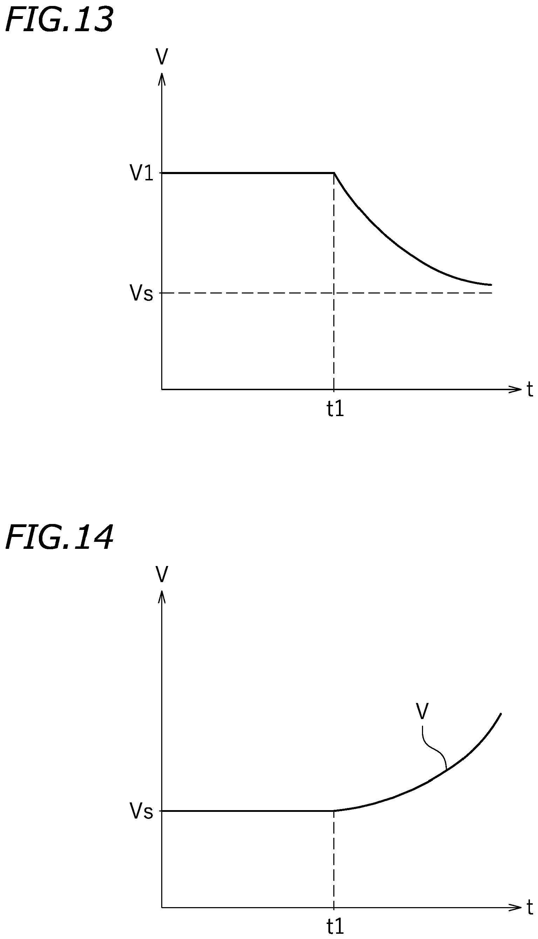

Incidentally, as illustrated in FIG. 13, the above-described vehicle speed control is started during traveling in some cases. In such a case, when set vehicle speed Vs is lower than vehicle speed V1 at a control start time t1, a controller suddenly limits an engine torque. As a result, the vehicle speed V sharply drops. As illustrated in FIG. 14, there are also cases where the above-described vehicle speed control is released during traveling. In such a case, the engine torque is no longer limited, and the engine torque is suddenly increased in some cases. As a result, the vehicle speed V abruptly rises.

A motorcycle has a lighter vehicle weight than that of an automobile. In a motorcycle, when an engine torque is suddenly limited at a start of vehicle speed control, there is a tendency that a degree of deceleration that a rider feels is higher than that in an automobile. Therefore, there is a probability that the riding feeling is deteriorated. When the engine torque is suddenly increased at a release of vehicle speed control, there is a tendency that a degree of acceleration that the rider feels is higher than that in the automobile. In this case, there is also a probability that the riding feeling is deteriorated.

Moreover, unlike an automobile, in a motor cycle, when turning left or right, a vehicle body of a motorcycle is leaned. When vehicle speed control is started in middle of turning left or right or when vehicle speed control is released in middle of turning left or right, there is a probability that a riding feeling is deteriorated. US-A-2020/207205 shows a motorcycle speed limiter and gradually releases torque limits when the speed limiter is deactivated.

DE-A-102015220658 discloses, in order to prevent a vehicle from rolling over, the detection of a speed of the vehicle is detected and the limitation of an acceleration of the vehicle as a function of the detected speed.

EP-A-2857301 discloses a vehicle, wherein a rotation speed of an engine detected by a rotation speed sensor, a change gear ratio detected by a change gear ratio sensor, a roll angle of a body detected by a roll angle sensor and a content of operation of a setting switch by a driver are supplied to a CPU of an ECU. Further, an accelerator opening detected by an accelerator opening sensor of an accelerator grip device is supplied to the CPU of the ECU. The CPU adjusts reaction force applied from the accelerator grip device to the driver by controlling a motor of the accelerator grip device. US-A-2012/067122 discloses a bank angle detecting device for a vehicle. The detecting device includes an angular velocity sensor for detecting a roll rate and a yaw rate of the vehicle, a roll rate estimating circuit for calculating an estimated roll rate, which is an angular velocity about a forward and rearward axis, on the basis of the roll rate, the yaw rate and a travelling speed, a bank angle estimator for calculating an estimated bank angle from the estimated roll rate, a straightforward travel determiner for determining a straightforward travelling condition on the basis of the estimated roll rate and an estimated yaw rate, a time-of-straight-forward-travel drift amount estimator for estimating a time-of-straight-forward drift amount from an output of the angular sensor in the event that the straightforward travel determiner determines a straightforward travel, and an angular velocity corrector for correcting the output of the angular velocity sensor with the time-of-straight-forward drift amount.

It is therefore an object of the present invention to improve, in a motorcycle in which vehicle speed control for at least preventing vehicle speed from exceeding set vehicle speed is performed, a riding feeling when the vehicle speed control is turned on or off or the set vehicle speed is changed during traveling better than in a conventional motorcycle.

SOLUTION TO THE PROBLEM

A motorcycle disclosed herein includes a front wheel, a rear wheel, a vehicle body supported by the front wheel and the rear wheel, a driving source supported by the vehicle body and configured to output a torque that drives the rear wheel, an accelerator operator that is operated by a rider, an accelerator detector configured to detect an operation amount of the accelerator operator, a vehicle speed detector configured to detect vehicle speed, a driving source controller configured to control the driving source such that an output torque of the driving source is a target torque, a vehicle speed controller configured to perform vehicle speed control that at least prevents the vehicle speed from exceeding set vehicle speed, and a torque change reducer configured to reduce a change of the output torque of the driving source when the vehicle speed control is turned on or off or the set vehicle speed is changed during travelling. The vehicle speed controller includes a memory that stores the set vehicle speed, a deviation calculator configured to calculate a deviation from the set vehicle speed of the vehicle speed detected by the vehicle speed detector, and a limit torque calculator configured to calculate a limit torque, based on the deviation. The torque change reducer includes a limit value setter configured to set a limit value of a change amount of the limit torque in accordance with a vehicle state and a limit torque adjuster configured to receive the limit torque from the limit torque calculator and adjust the limit torque such that the change amount of the limit torque does not exceed the limit value. The driving source controller includes a rider request torque calculator configured to calculate a rider request torque, based on the operation amount of the accelerator operator and a target torque calculator configured to receive an adjusted limit torque from the limit torque adjuster and calculate the target torque, based on the adjusted limit torque and the rider request torque.

According to the motorcycle, the limit torque is calculated during execution of the vehicle control and, when the limit torque is equal to or less than the rider request torque, the limit torque is set to the target torque. Thus, the driving source is controlled such that the vehicle speed does not exceed the set vehicle speed. Moreover, according to the above-described motorcycle, when the vehicle speed control is turned on or off or the set vehicle value is changed during traveling, the change amount of the limit torque is limited in accordance with the vehicle state. Thus, a rapid change of the target torque is reduced, and accordingly, a change of the output torque of the driving source is reduced. Therefore, a riding feeling can be improved.

According to the invention, the target torque calculator is configured to, if the vehicle speed control is turned on or if the set vehicle speed is changed to be lower during traveling, set the rider request torque to the target torque when the adjusted limit torque is larger than the rider request torque and set the adjusted limit torque to the target torque when the adjusted limit torque is equal to or less than the rider request torque.

Therefore, a rapid reduction of the output torque of the driving source is reduced during deceleration. Therefore, the riding feeling during deceleration can be improved.

According to one preferred aspect, the target torque calculator is configured to, if the vehicle speed control is turned off or if the set vehicle speed is changed to be higher during traveling, set the adjusted limit torque to the target torque when the adjusted limit torque is smaller than the rider request torque and set the rider request torque to the target torque when the adjusted limit torque is equal to or more than the rider request torque.

According to the aspect, an excessive increase of the output torque of the driving source is reduced during acceleration. Therefore, the riding feeling during acceleration can be improved.

According to the invention, the motorcycle includes a transmission including a driving member connected to the driving source and a driven member connected to the rear wheel and configured to change a deceleration rate between the driving member and the driven member, and a deceleration rate detector configured to detect a deceleration rate of the transmission. The limit value setter is configured to set the limit value in accordance with the deceleration rate of the transmission.

Therefore, the riding feeling can be improved in accordance with a deceleration rate.

The limit value setter is configured to set a first limit value as the limit value if the deceleration rate of the transmission is a first deceleration rate, and set a second limit value that is smaller than the first limit value as the limit value if the deceleration rate of the transmission is a second deceleration rate that is higher than the first deceleration rate.

According to one preferred aspect, the motorcycle further includes a lean state detector configured to detect a lean parameter related to a lean state of the vehicle body. The limit value setter is configured to set the limit value in accordance with a value of the lean parameter.

According to the aspect, the riding feeling in turning left or right can be improved.

The lean parameter is a bank angle of the vehicle body or an angular velocity of the bank angle, and the limit value setter may be configured to set a third limit value as the limit value if the value of the lean parameter is a first value, and set a fourth limit value that is smaller than the third limit value as the limit value if the value of the lean parameter is a second value that is larger than the first value.

The vehicle speed controller may be configured to calculate the limit torque such that the vehicle speed is equal to or less than the set vehicle speed.

The vehicle speed controller may be configured to calculate the limit torque such that the vehicle speed matches the set vehicle speed.

ADVANTAGES OF THE INVENTION

According to the present invention, in a motorcycle in which vehicle speed control for at least preventing vehicle speed from exceeding set vehicle speed is performed, a riding feeling when the vehicle speed control is turned on or off or the set vehicle speed is changed during traveling can be improved better than in a conventional motorcycle.

BRIEF DESCRIPTION OF THE DRAWINGS

FIG. 1 is a side view of a motorcycle according to an embodiment.
FIG. 2 is a cross-sectional view of an internal combustion engine.
FIG. 3 is a plan view of a handle.
FIG. 4 is a block diagram illustrating sensors, switches, an ECU, and target devices to be controlled.
FIG. 5 is a functional block diagram of a control system.
FIG. 6 is a graph illustrating an example of a change of vehicle speed.
FIG. 7 is a graph illustrating an example of a change of an output torque.
FIG. 8 is a graph illustrating an example of a change of the output torque for each deceleration rate.
FIG. 9 is a graph illustrating another example of a change of the output torque.
FIG. 10 is a graph illustrating an example of a change of the output torque for each bank angle.
FIG. 11 is a graph illustrating another example of a change of the output torque for each bank angle.
FIGS. 12A to 12C are graphs illustrating operation examples, FIG. 12A illustrates a change of a throttle opening, FIG. 12B illustrates changes of vehicle speed and limit vehicle speed, and FIG. 12C illustrates changes of a rider request torque, a limit torque before adjustment, an adjusted limit torque, and a target torque.
FIG. 13 is a graph illustrating a change of vehicle speed in a case where vehicle speed control is started during traveling in a conventional motorcycle.
FIG. 14 is a graph illustrating a change of vehicle speed in a case where vehicle speed control is released during traveling in a conventional motorcycle.

DESCRIPTION OF EMBODIMENTS

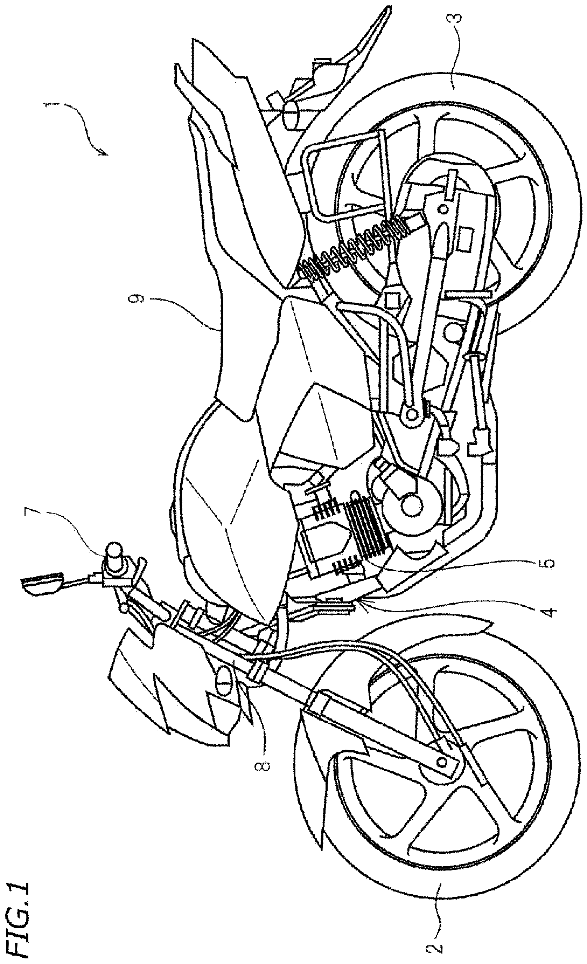

With reference to the attached drawings, embodiments will be described below. FIG. 1 is a side view of a motorcycle 1 according to an embodiment. The motorcycle 1 includes a front wheel 2, a rear wheel 3, a vehicle body 4 supported by the front wheel 2 and the rear wheel 3, and an internal combustion engine (which will be hereinafter referred to as an engine) 5 supported by the vehicle body 4. The engine 5 is an example of a "driving source" that outputs a torque that drives the rear wheel 3. The vehicle body 4 includes a steering shaft 8 with a handle 7 attached thereto and a seat 9 on which a rider sits.

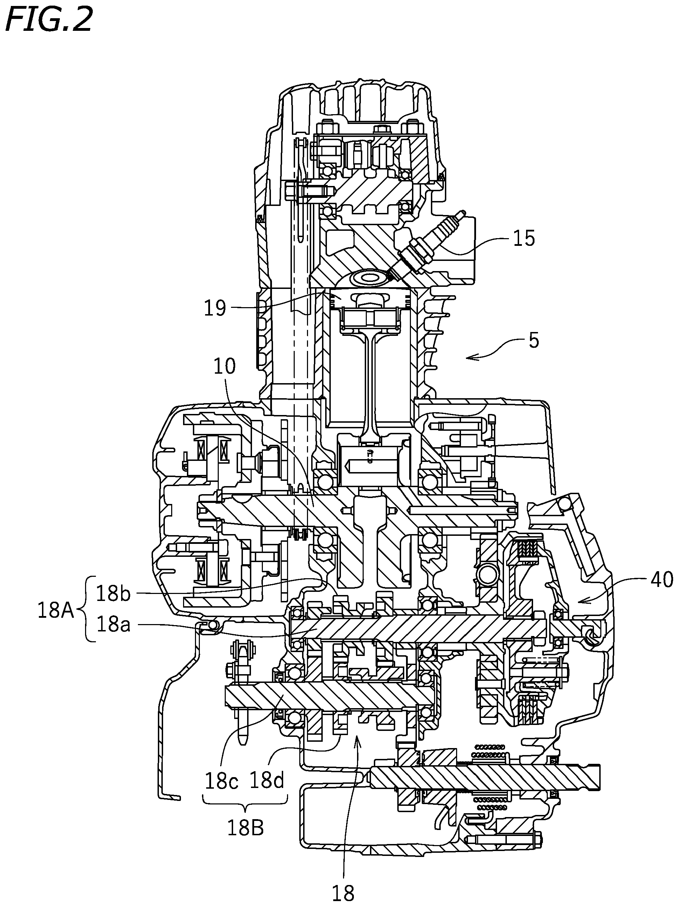

As illustrated in FIG. 2, the engine 5 includes a piston 19 and a crank shaft 10 connected to the piston 19. A clutch 40 is coupled to the crank shaft 10. A transmission 18 is coupled to the clutch 40.

The transmission 18 includes a driving member 18A coupled to the engine 5 and a driven member 18B connected to the rear wheel 3. In this embodiment, the transmission 18 is a multistep transmission. The driving member 18A includes a driving shaft 18a and a plurality of driving gears 18b. The driven member 18B includes a driven shaft 18c and a plurality of driven gears 18d. In the transmission 18, a torque is transmitted from the driving member 18A to the driven member 18B. The transmission 18 is configured to change a deceleration rate. The deceleration rate herein is a ratio of rotation speed of the driving member 18A to rotation speed of the driven member 18B. That is, the deceleration rate = (the rotation speed of the driving member 18A)/(the rotation speed of the driven member 18B). The driven member 18B of the transmission 18 and the rear wheel 3 are connected to each other via a power transmission member, such as a chain or the like. Note that there is no particular limitation on the number of shift steps of the transmission 18 but the number of shift steps is, for example, six. The transmission 18 is not limited to a multistep transmission and may be a continuously variable transmission, such as a CVT or the like.

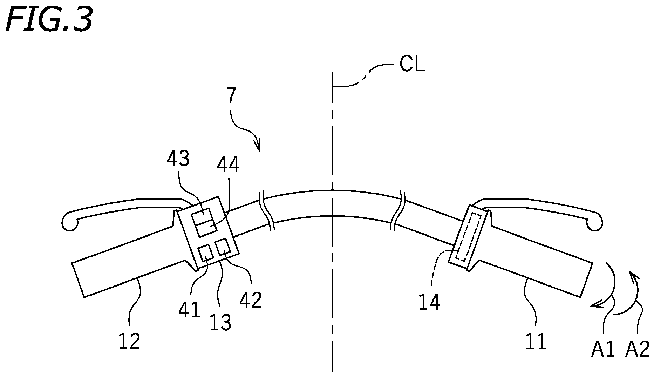

As illustrated in FIG. 3, a rotatable accelerator grip 11 is provided in a right end portion of the handle 7. The accelerator grip 11 is an example of an "accelerator operator" operated by a rider. The accelerator grip 11 is rotatable in an opening direction A1 and a closing direction A2. Herein, the opening direction A1 is a counterclockwise direction when viewed from a right side. The closing direction A2 is a direction opposite to the opening direction A1, that is, a clockwise direction when viewed from a right side. A return spring 14 that energizes the accelerator grip 11 to a full close position is provided in the accelerator grip 11. When the rider releases his or her hand from the accelerator grip 11, the accelerator grip 11 automatically returns to the full close position.

A nonrotatable fixed grip 12 and a switch box 13 are provided in a left end portion of the handle 7. The switch box 13 is arranged rightward of the fixed grip 12 and leftward of a vehicle center line CL. In the switch box 13, a selection switch 41, a set switch 42, an up switch 43, and a down switch 44 are provided. There is no particular limitation on forms of the switches 41 to 44, but the switches 41 to 44 are constituted by button type switches herein.

In the motorcycle 1 according to this embodiment, at least a normal operation in which vehicle speed is not limited and an operation (a speed limit operation) in which speed limit control that limits vehicle speed are possible. The selection switch 41 is a switch used for selecting a type of operation. Herein, each time the selection switch 41 is pressed, the normal operation and the speed limit operation are selected in order. The set switch 42 is a switch used for switching on and off of a selected operation. For example, when the set switch 42 is pressed in a state where the speed limit operation is selected, the speed limit operation is executed. When the set switch 42 is pressed during the speed limit operation, the speed limit operation is released. The up switch 43 and the down switch 44 are used to set or change set vehicle speed. When the rider operates the up switch 43, the set vehicle speed is increased and, when the rider operates the down switch 44, the set vehicle speed is reduced.

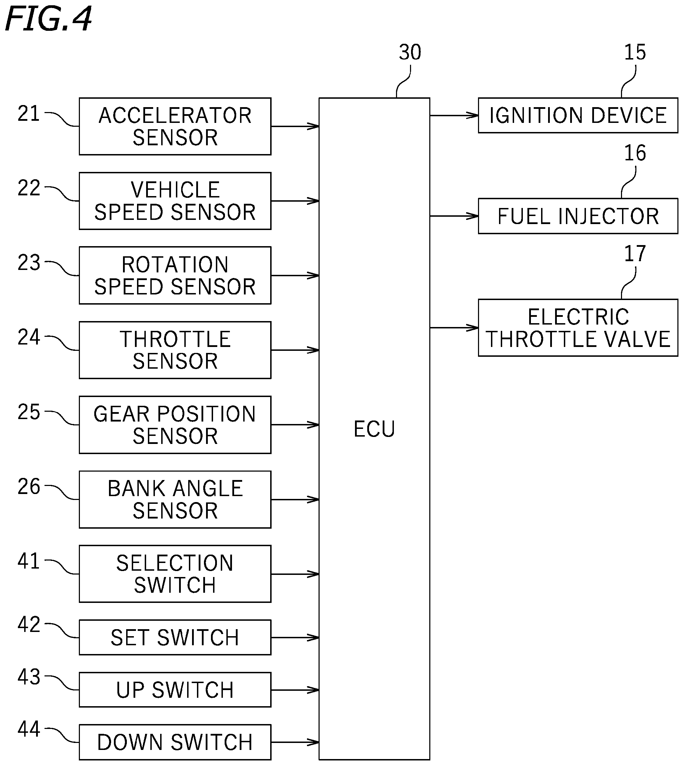

As illustrated in FIG. 4, the engine 5 includes an ignition device 15, a fuel injector 16, and an electric throttle valve 17. The ignition device 15, the fuel injector 16, and the electric throttle valve 17 are operated, so that a torque output by the engine 5 (which will be hereinafter referred to as an output torque) is controlled.

The motorcycle 1 includes an accelerator sensor 21 that detects an operation amount of the accelerator grip 11, a vehicle speed sensor 22 that detects vehicle speed, a rotation speed sensor 23 that detects rotation speed of the engine 5, a throttle sensor 24 that detects an opening of the electric throttle valve 17 (which will be hereinafter referred to as a throttle opening), a gear position sensor 25 that detects a gear position of the transmission 18, and a bank angle sensor 26 that detects a bank angle. In this embodiment, the operation amount of the accelerator grip 11 means a rotation angle of the accelerator grip 11 from the full close position in the opening direction A1. As the rotation angle of the accelerator grip 11 increases, the operation amount of the accelerator grip 11 increases. The rotation speed of the engine 5 is rotation speed of the crank shaft 10. The accelerator sensor 21, the vehicle speed sensor 22, the gear position sensor 25, and the bank angle sensor 26 are examples of "an accelerator detector," "a vehicle speed detector," "a deceleration rate detector," and "a lean state detector," respectively.

The motorcycle 1 includes an electronic control unit (ECU) 30 as a control unit that performs various controls. Although not illustrated in the drawings, the ECU 30 includes a CPU, a ROM, a RAM, or the like. The ECU 30 is communicably coupled to the accelerator sensor 21, the vehicle speed sensor 22, the rotation speed sensor 23, the throttle sensor 24, the gear position sensor 25, and the bank angle sensor 26 and is configured to receive signals from the sensors. The ECU 30 is also communicably coupled to the selection switch 41, the set switch 42 the up switch 43, and the down switch 44 and is configured to receive signals from the switches. The ECU 30 is communicably coupled to the ignition device 15, the fuel injector 16, and the electric throttle valve 17 and is configured to transmit signals to these components. By controlling the ignition device 15, the fuel injector 16, and the electric throttle valve 17, the ECU 30 controls the output torque of the engine 5.

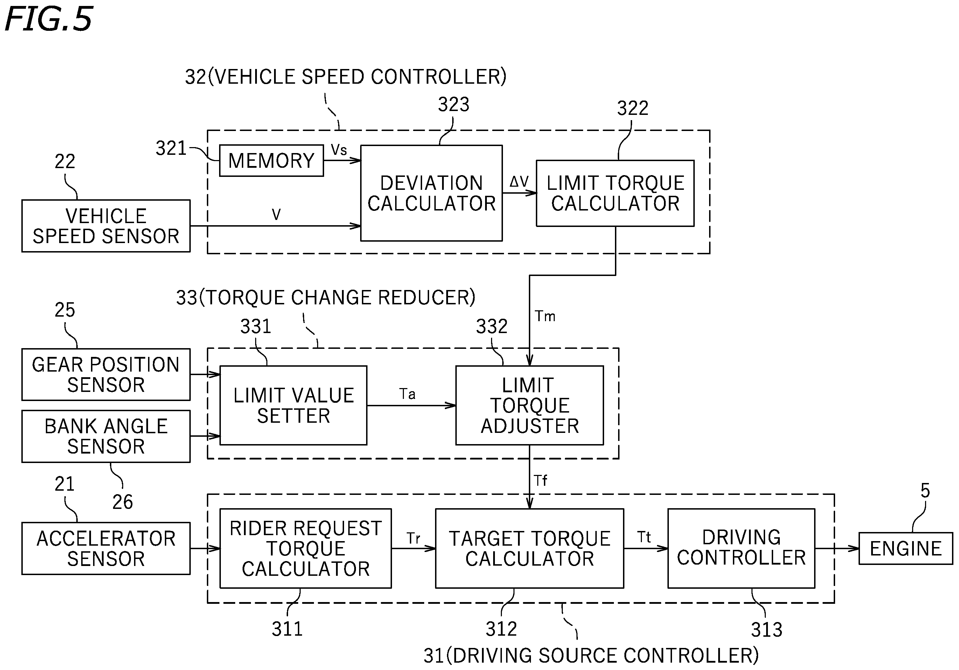

FIG. 5 is a functional block diagram of the ECU 30. The ECU 30 executes a computer program stored in the ROM or the like to function as a driving source controller 31, a vehicle speed controller 32, and a torque change reducer 33. The driving source controller 31 controls the engine 5 such that the output torque of the engine 5 becomes a target torque Tt described later. The vehicle speed controller 32 performs speed limit control that prevents vehicle speed V from exceeding set vehicle speed Vs described later. The torque change reducer 33 reduces a change of the output torque of the engine 5 when the speed limit control is turned on or off or the set vehicle speed Vs is changed during traveling.

The vehicle speed controller 32 includes a memory 321 that stores the set vehicle speed Vs, a deviation calculator 323 that calculates a deviation $\Delta V = Vs - V$ from the set vehicle speed Vs of the vehicle speed V, and a limit torque calculator 322 that calculates a limit torque Tm, at least based on the deviation $\Delta V$. The memory 321 is configured such that the set vehicle speed Vs is rewritable therein. When the rider operates the up switch 43 or the down switch 44 to change the set vehicle speed Vs, the memory 321 stores the changed set vehicle speed Vs. There is no particular limitation on a method for calculating the limit torque Tm in the limit torque calculator 322. Herein, the limit torque Tm is calculated as the limit torque Tm = a predetermined feedback gain $\times$ the deviation $\Delta V$ + a predetermined travel resistance feedforward torque. Note that the limit torque Tm is a parameter that changes with a lapse of time.

The torque change reducer 33 reduces a degree of acceleration or deceleration when the speed limit control is turned on or off or the set vehicle speed Vs is changed during traveling. As described above, the limit torque Tm changes with a lapse of time. The torque change reducer 33 limits a change amount of the limit torque Tm. The torque change reducer 33 includes a limit value setter 331 and a limit torque adjuster 332. When a condition of the speed limit control is changed during traveling of the motorcycle 1, the limit value setter 331 sets a limit value Ta of the change amount of the limit torque Tm in accordance with a vehicle state. The limit value Ta is set for the change amount of the limit torque Tm such that the limit torque Tm is not excessively increased or reduced in a short time.

The limit torque Tm is input to the limit torque adjuster 332 from the limit torque calculator 322, and the limit value Ta is input to the limit torque adjuster 332 from the limit value setter 331. The limit torque adjuster 332 calculates an adjusted limit torque Tf in accordance with procedures described below in every predetermined cycle.

First, the limit torque adjuster 332 calculates a limit torque change amount in accordance with Expression 1 below.

[Expression 1]

Change amount of Limit torque = Limit torque Tm − Previous calculation value

of Adjusted limit torque Tf

Note that there is no previous calculation value of the adjusted limit torque Tf at a start of control. Therefore, a rider request torque Tr is regarded as the previous calculation value of the adjusted limit torque Tf.

Next, the limit torque adjuster 332 determines whether an absolute value of the change amount of the limit torque is larger than the limit value Ta. If the absolute value of the change amount of the limit torque is larger than the limit value Ta, the limit torque adjuster 332 adjusts the limit torque such that the absolute value of the change amount of the limit torque does not exceed the limit value Ta. That is, the limit torque adjuster 332 adjusts the limit torque such that |the change amount of the limit torque| ≤ the limit value Ta.

Lastly, the limit torque adjuster 332 calculates the adjusted limit torque Tf in accordance with Expression 2 described below.

[Expression 2]

Adjusted limit torque Tf = Previous value of Adjusted limit torque Tf + Change

amount of Limit torque

The driving source controller 31 includes a rider request torque calculator 311 that calculates the rider request torque Tr, based on the operation amount of the accelerator grip 11 (which will be hereinafter referred to as an accelerator operation amount), a target torque calculator 312 that calculates the target torque Tt, and a driving controller 313 that controls the engine 5 such that the output torque of the engine 5 becomes the target torque Tt. The rider request torque Tr is input to the target torque calculator 312 from the rider request torque calculator 311 and the adjusted limit torque Tf is input to the target torque calculator 312 from the limit torque adjuster 332. The target torque calculator 312 sets the adjusted limit torque Tf to the target torque Tt if it is needed to impose a limit on the rider request torque Tr and sets the rider request torque Tr to the target torque Tt if it is not needed to impose a limit on the rider request torque Tr.

That is, if the speed limit control is turned on or if the set vehicle speed is changed to be lower (for example, if the vehicle speed is reduced in accordance with a vehicle speed limit imposed thereon) during traveling, the target torque calculator 312 sets the rider request torque Tr to the target torque Tt when the adjusted limit torque Tf is larger than the rider request torque Tr and sets the adjusted limit torque Tf to the target torque Tt when the adjusted limit torque Tf is equal to or less than the rider request torque Tr. If the speed limit control is turned off or if the set vehicle speed is changed to be higher (for example, if the vehicle speed limit is released and thus the vehicle speed is increased) during traveling, the target torque calculator 312 sets the adjusted limit torque Tf to the target torque Tt if the adjusted limit torque Tf is smaller than the rider request torque Tr and sets the rider request torque Tr to the target torque Tt if the adjusted limit torque Tf is equal to or more than the rider request torque Tr.

The target torque Tt calculated in the above-described manner is input to the driving controller 313. The driving controller 313 controls the engine 5 such that the engine output torque becomes the target torque Tt.

Note that the phrase "a condition of the speed limit control is changed" above encompasses a case where the speed limit control is switched from off to on, a case where the speed limit control is switched from on to off, and a case where the set vehicle speed Vs is changed while the speed limit control is on.

The "vehicle state" can be specified by values of various parameters detected by the various sensors (see the sensors 21 to 26 in FIG. 4) of the motorcycle 1. For example, when a gear position is detected by the gear position sensor 25, a deceleration rate of the transmission 18 is specified. For example, the vehicle state is specified by the deceleration rate of the transmission 18. The vehicle state is specified by the bank angle detected by the bank angle sensor 26. Alternatively, the vehicle state is specified by an angular velocity of the bank angle. Note that the vehicle state may be specified based on a value of a single parameter and may be specified based on values of a plurality of parameters.

A configuration of the motorcycle 1 has been described above. Next, an example of torque change reducing control executed by the motorcycle 1 will be described. The torque change reducing control is executed to suppress reduction of the riding feeling when a condition of the speed limit control is changed during traveling of the motorcycle 1. That is, the torque change reducing control is executed to improve the riding feeling better than in a conventional motorcycle.

(First Control Example)

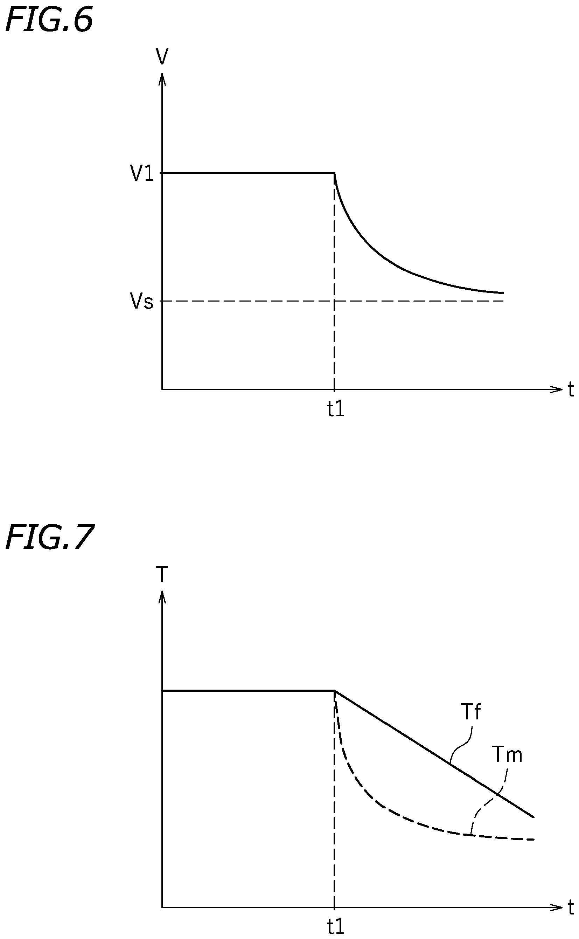

As illustrated in FIG. 6, when the motorcycle 1 travels at the vehicle speed V1, the rider starts speed limit operation at a time t1 in some cases. That is, while the motorcycle 1 travels at the vehicle speed V1, speed limit control is switched from off to on in some cases. In this case, if the vehicle speed V1 is higher than the set vehicle speed Vs, the output torque of the engine 5 is limited by the vehicle speed controller 32 such that the vehicle speed V becomes the set vehicle speed Vs. Note that, in FIG. 6, "t" denotes a time and "V" denotes vehicle speed.

Specifically, when the set vehicle speed Vs is lower than the current vehicle speed V1, the limit torque calculator 322 of the vehicle speed controller 32 calculates the limit torque Tm in order to cause the vehicle speed V to be the set vehicle speed Vs. If the torque change reducer 33 is not provided, the limit torque Tm (see FIG. 5) is input to the target torque calculator 312 from the limit torque calculator 322. Since the vehicle speed V1 at the time t1 is larger than the set vehicle speed Vs, the limit torque Tm is equal to or less than the rider request torque Tr. Therefore, the target torque calculator 312 sets the limit torque Tm to the target torque Tt. As a result, the target torque Tt is reduced from Tr to Tm. Herein, if a difference between V1 and Vs is large, a difference between Tr and Tm is large. Therefore, for example as indicated by a broken line in FIG. 7, the output torque T of the engine 5 rapidly reduces. Thus, the riding feeling is deteriorated.

However, the motorcycle 1 according to this embodiment includes the torque change reducer 33. If the speed limit control is switched from off to on during traveling and the vehicle speed V1 at that time is larger than the set vehicle speed Vs, the limit torque is adjusted such that an absolute value of a change amount of the limit torque (unless specifically stated otherwise, the absolute value of the change amount of the limit torque will be simply referred to as a change amount of the limit torque) does not exceed the limit value Ta. The adjusted limit torque Tf is input to the target torque calculator 312 and the target torque Tt is changed to the adjusted limit torque Tf. Herein, the adjusted limit torque Tf is larger than the limit torque Tm before adjustment. Therefore, as indicated by a solid line in FIG. 7, rapid reduction of the output torque T of the engine 5 can be avoided. Thus, the degree of deceleration of the vehicle body is reduced and the riding feeling is improved. Note that an aspect of change of the output torque indicated by the solid line in FIG. 7 is merely an example. The change amount of the output torque per unit time may be constant and may not be constant. In FIG. 7, the line indicating the change of the output torque may be a straight line and may be a curved line.

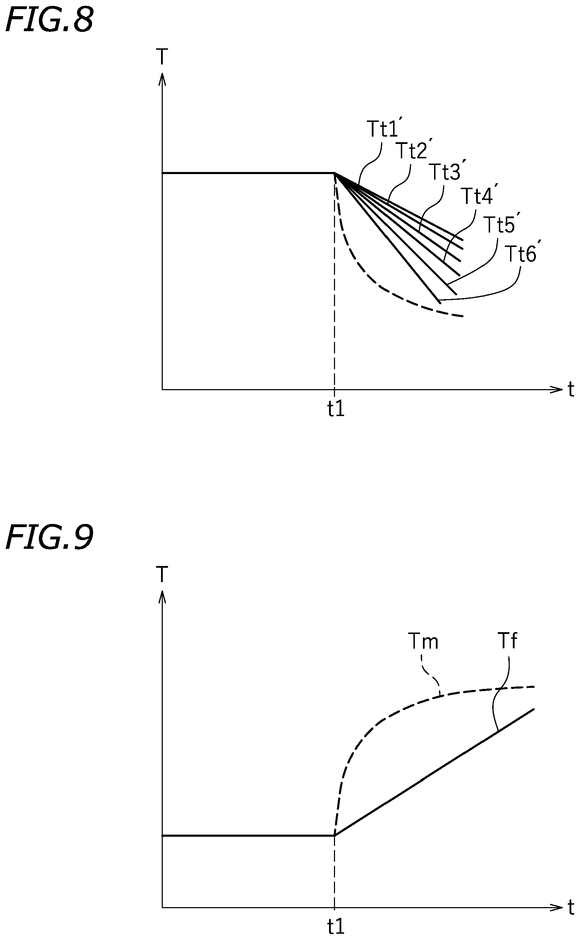

Incidentally, there is a tendency that, as the deceleration rate increases, an influence of change of the condition of the speed limit control on the riding feeling increases. Therefore, herein, a degree of reduction is caused to increase as the deceleration rate increases. In this control example, the limit value Ta of the change amount of the limit torque is set such that, as the deceleration rate increases, the limit value Ta reduces. The deceleration rate reduces in an order of first speed, second speed, third speed, fourth speed, fifth speed, and sixth speed, and therefore, when respective limit values at the first speed to the sixth speed are Ta1 to Ta6, Ta1 < Ta2 < Ta3 < Ta4 < Ta5 < Ta6. When respective target torques Tt' after reduction at the first speed to the sixth speed are Tt1' to Tt6', Tt1' > Tt2' > Tt3' > Tt4' > Tt5' > Tt6'. Thus, as illustrated in FIG. 8, as the deceleration rate increases (in other words, as the gear position reduces), a reduction rate of the output torque T reduces. Accordingly, a behavior of the vehicle body is optimized and the riding feeling is improved.

There is no particular limitation on a specific method for setting the limit value Ta and a specific value of the limit value Ta. For example, the limit values Ta2 to Ta6 at the second speed to the sixth speed may be set using the limit value Ta1 at the first speed. For example, using coefficients K2 to K6 each of which is larger than 1 satisfying a relationship of K2 < K3 < K4 < K5 < K6, Ta2 = K2·Ta1, Ta3 = K3·Ta1, Ta4 = K4·Ta1, Ta5 = K5·Ta1, Ta6 = K6·Ta1 may be set to the limit values Ta2 to Ta6 at the second speed to the sixth speed. Alternatively, a map that defines a relationship between the deceleration rate and the limit value Ta may be stored in the ECU 30 in advance and the limit value setter 331 may be configured to read the limit values Ta 1 to Ta6 at the first speed to the sixth speed from the map.

(Second Control Example)

There are cases where the rider operates the down switch 44 or the like to reduce the set vehicle speed while speed limit control is executed. For example, the set vehicle speed is changed to a smaller value than V1 at the time t1 while the motorcycle 1 travels at the set vehicle speed V1 in some cases. In this case, similar to the first control example (see FIG. 6), without any action taken, the output torque T of the engine 5 is rapidly reduced (see FIG. 7), and therefore, there is a probability that the riding feeling is deteriorated.

However, the motorcycle 1 includes the torque change reducer 33, and therefore, similar to the first control example, a rapid change of the target torque is reduced. Accordingly, a rapid change of the output torque T of the engine 5 is reduced and the riding feeling is improved.

Note that, in the second control example and third and fourth control examples described later, similar to the first control example, the degree of reduction is caused to increase as the deceleration rate increases. The limit value Ta is set such that, as the deceleration rate increases, the limit value Ta reduces. Similar to the first control example, the limit values Ta1 to Ta6 at the first speed to the sixth speed can be set using an operational expression, a map, or the like.

(Third Control Example)

There are cases where speed limit control is switched from on to off while the motorcycle 1 travels at the set vehicle speed Vs with a vehicle speed limit imposed on the motorcycle 1 by speed limit control. When the speed limit control is turned off, without any action taken, the target torque is rapidly increased in some cases and, for example, as indicated by a broken line in FIG. 9, the output torque T of the engine 5 is rapidly increased. Thus, a degree of acceleration of the vehicle body is increased, and there is a probability that the riding feeling is deteriorated.

However, the motorcycle 1 includes the torque change reducer 33, and therefore, a rapid increase of the target torque can be avoided. Accordingly, for example, as indicated by a solid line in FIG. 9, a rapid change of the output torque T of the engine 5 is reduced. Thus, the riding feeling is improved.

(Fourth Control Example)

There are cases where the rider operates the up switch 43 or the like to increase the set vehicle speed while the motorcycle 1 travels at the set vehicle speed Vs with a vehicle speed limit imposed on the motorcycle 1 by speed limit control. In this case, similar to the third control example, without any action taken, the output torque of the engine 5 is rapidly increased (see the broken line in FIG. 9) and there is a probability that the riding feeling is deteriorated.

However, the motorcycle 1 includes the torque change reducer 33, and therefore, similar to the third control example, a rapid change of the output torque T of the engine 5 is reduced. Accordingly, the riding feeling is improved.

(Fifth Control Example)

In the motorcycle 1, when turning left or right, the rider leans the vehicle body. There are cases where the rider starts speed limit control in middle of turning left or right. For example, the rider starts speed limit control at the time t1 (see FIG. 6) during turning left or right in some cases. If the vehicle speed V1 at a start of the speed limit control is higher than the set vehicle speed Vs, the target torque is rapidly reduced in some cases. If the torque change reducer 33 is not provided, the output torque T of the engine 5 is rapidly reduced. Thus, the riding feeling is deteriorated. Moreover, oversteering tends to occur.

However, in the motorcycle 1, because the change amount of the limit toque is limited, the speed limit control is started in turning left or right and, if the vehicle speed V1 at that time is higher than set vehicle speed Vs, a rapid change of the target torque is reduced. Accordingly, a rapid change of the output torque T of the engine 5 can be avoided, and therefore, the riding feeling is improved. Moreover, oversteering is suppressed.

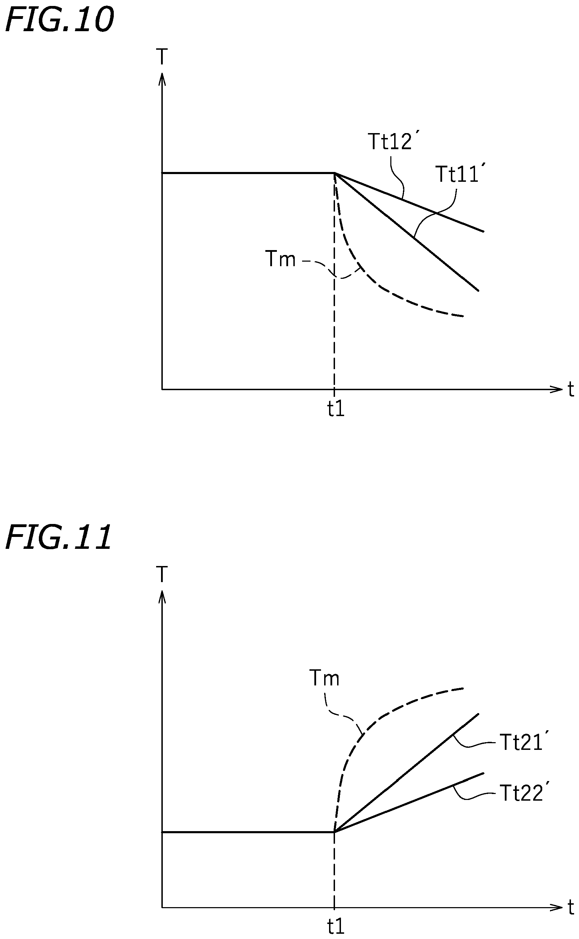

The bank angle is an example of a lean parameter indicating a lean state of the vehicle body. The limit value setter 331 sets the limit value Ta such that, as the bank angle increases, the limit value Ta reduces. For example, the limit value setter 331 sets the limit value to Ta11 if the bank angle is a first value, and sets the limit value to Ta12 that is smaller than Ta11 if the bank angle is a second value that is larger than the first value. Note that Ta11 and Ta12 are an example of "a third limit value" and an example of "a fourth limit value," respectively. Thus, a change of the output torque T of the engine 5 is more largely reduced as the bank angle increases. When the output torques when the bank angle is the first value and the second value are Tt11' and Tt12', for example, as illustrated in FIG. 10, a reduction rate of Tt12' is lower than a reduction rate of Tt11'. Note that, similar to the first control example, the limit value Ta can be set using an operational expression, a map, or the like.

The limit value setter 331 may be configured to set the limit value Ta in accordance with the angular velocity of the bank angle, instead of the bank angle. The angular velocity of the bank angle is another example of the lean parameter. In this case, a rapid change of the output torque T of the engine 5 is reduced, and the riding feeling is improved. Moreover, oversteering is suppressed. The limit value setter 331 may be configured to set the limit value Ta such that, as the angular velocity of the bank angle increases, the limit value Ta reduces. For example, the limit value setter 331 may be configured to set the limit value to Ta21 if the angular velocity of the bank angle is a first value, and set the limit value to Ta22 if the angular velocity of the bank angle is a second value that is larger than the first value. Note that Ta21 > Ta22. The limit value Ta can be set using an operational expression, a map, or the like.

In the fifth control example and sixth and seventh control examples described later, the degree of reduction may be caused to increase as the deceleration rate increases. The limit value setter 331 may be configured to set the limit value Ta, based on only the bank angle or only the angular velocity of the bank angle, and may be configured to set the limit value Ta, based on the bank angle or the angular velocity of the bank angle and the deceleration rate.

(Sixth Control Example)

There are cases where the set vehicle speed is changed to a smaller value than V1 while the motorcycle 1 turns left or right at the vehicle speed V1 with a vehicle speed limit imposed on the motorcycle 1 by speed limit control. In this case, similar to the fifth control example, without any action taken, the output torque of the engine 5 is rapidly reduced, and there is a probability that the riding feeling is deteriorated. Moreover, oversteering tends to occur.
However, the motorcycle 1 includes the torque change reducer 33, and therefore, similar to the fifth control example, a rapid change of the output torque T of the engine 5 is reduced. Accordingly, the riding feeling is improved. Moreover, oversteering is suppressed.
Also, in the sixth control example, the degree of reduction is caused to increase as the bank angle or the angular velocity of the bank angle increases. Similar to the fifth control example, the limit value Ta is set such that, as the bank angle or the angular velocity of the bank angle increases, the limit value Ta reduces. The limit value Ta can be set using an operational expression, a map, or the like.

(Seventh Control Example)

There are cases where speed limit control is switched from on to off while the motorcycle 1 turns left or right at the set vehicle speed Vs with a vehicle speed limit imposed on the motorcycle 1 by speed limit control. In this case, without any action taken, the output torque T of the engine 5 is rapidly increased in some cases (see the broken line in FIG. 9). In that case, the degree of acceleration of the vehicle body is increased, and there is a probability that the riding feeling is deteriorated.
However, the motorcycle 1 includes the torque change reducer 33, and therefore, a rapid change of the output torque T of the engine 5 is reduced. Accordingly, the riding feeling is improved.
Also, in the seventh control example, similar to the fifth control example, the limit value setter 331 causes the degree of reduction to increase as the bank angle or the angular velocity of the bank angle increases. The limit value Ta is set such that, as the bank angle or the angular velocity of the bank angle increases, the limit value Ta reduces. For example, the limit value setter 331 sets the limit value to Ta21 if the bank angle or the angular velocity of the bank angle is a first value and sets limit value to Ta22 that is a smaller value than Ta21 if the bank angle is a second value that is larger than the first value. When the output torques when the bank angle or the angular velocity of the bank angle is the first value and the second value are Tt21' and Tt22', for example, as illustrated in FIG. 11, an increase rate of Tt22' is lower than an increase rate of Tt21'. A change of the output torque T of the engine 5 is more largely reduced as the bank angle or the angular velocity of the bank angle increases. Note that, also in this control example, the limit value Ta can be set using an operational expression, a map, or the like.

(Eighth Control Example)

There are cases where the rider operates the up switch 43 or the like to increase the set vehicle speed while the motorcycle 1 turns left or right at the set vehicle speed with a vehicle speed limit imposed on the motorcycle 1 by speed limit control. For example, the set vehicle speed is changed to a larger value than V1 while the motorcycle 1 turns left or right at the vehicle speed V1 in some cases. In this case, without any action taken, the output torque T of the engine 5 is rapidly increased, and there is a probability that the riding feeling is deteriorated.
However, the motorcycle 1 includes the torque change reducer 33, and therefore, a rapid change of the output torque T of the engine 5 is reduced. Accordingly, the riding feeling is improved.
Similar to the seventh control example, the limit value Ta is set such that, as the bank angle or the angular velocity of the bank angle increases, the limit value Ta reduces. Also, in the eighth control example, the degree of reduction may be caused to increase as the deceleration rate increases. The limit value setter 331 may be configured to set the limit value Ta, based on only the bank angle or only the angular velocity of the bank angle, and may be configured to set the limit value Ta, based on the bank angle or the angular velocity of the bank angle and the deceleration rate. The limit value Ta can be set using an operational expression, a map, or the like.

(Operation Example)

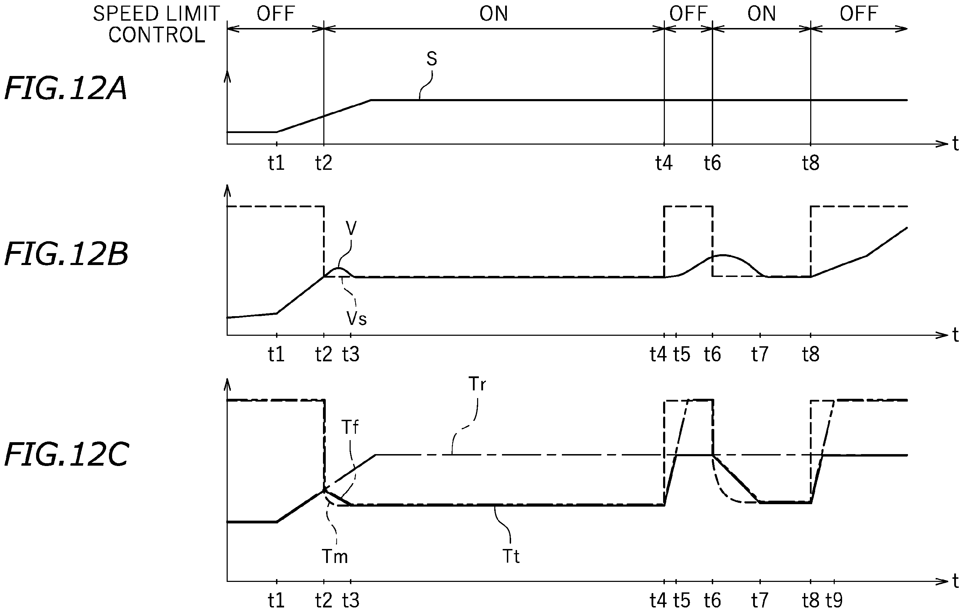

Next, with reference to FIGS. 12A to 12C, one operation example of the motorcycle 1 will be described. FIG. 12A illustrates a change of a throttle opening S. FIG. 12B illustrates changes of the limit vehicle speed Vs and the vehicle speed (actual vehicle speed) V of the motorcycle 1. FIG. 12C illustrates changes of the rider request torque Tr, the limit torque Tm before adjustment, the adjusted limit torque Tf, and the target torque Tt.

When the rider opens the accelerator grip 11 at the time t1, the target torque Tt gradually increases, so that the vehicle speed V increases. When speed limit control is started at a time t2, the target torque reduces due to a restriction of the limit torque even while the rider keeps opening the accelerator grip 11. However, the change amount of the limit torque is limited, and therefore, a rapid change of the target torque is reduced (the time t2 to a time t3). When the vehicle speed V becomes the set vehicle speed Vs at the time t3, the change amount of the limit torque stays at the limit value or less, and the limit torque Tm becomes the target torque Tt. At or after the time t3, the motorcycle 1 travels at the set vehicle speed Vs.

When the speed limit control ends at a time t4, the target torque Tt increases to match the rider request torque Tr. However, the rapid increase of the target torque Tt is reduced (the time t4 to a time t5). As the target torque Tt increases, the vehicle speed V increases (the time t4 to a time t6).

When the speed limit control is restarted at the time t6, the target torque reduces due to the restriction of the limit torque again. However, the rapid change of the target torque is reduced (the time t6 to a time t7). When the vehicle speed becomes the set vehicle speed Vs at the time t7, the limit torque Tm becomes a target. At and after the time t7, the motorcycle 1 travels at the set vehicle speed Vs again.

When the speed limit control ends at a time t8, the target torque Tt increases to match the rider request torque Tr. However, the rapid increase of the target torque Tt is reduced (the time t8 to a time t9). As the target torque Tt increases, the vehicle speed V increases (from the time t9).

(Advantageous Effects of Embodiments)

As described above, according to the motorcycle 1 according to this embodiment, when limit speed control is turned on or off or the set vehicle speed is changed during traveling, the limit value is set in accordance with the vehicle state and the limit torque is adjusted such that the change amount of the limit torque does not exceed the limit value. Thus, a change of the output torque of the engine 5 is reduced. Therefore, the riding feeling can be improved better than a conventional motorcycle.

Note that the above-described embodiment is merely an example and the present invention can be implemented in various other modes.

The limit value setter 331 sets the limit value in accordance with the vehicle state, but the vehicle state is not limited to the deceleration rate or the lean parameter related to the lean state of the vehicle body. The number of parameters indicating the vehicle state is not limited to one and may be two or more.

The driving source of the motorcycle 1 is not limited to an internal combustion engine and may be an electric motor.

Changing of on and off of speed limit control or the set vehicle speed may not be based on operations of the switches 41 to 44 of the switch box 13. For example, the speed limit control may be switchable from on to off by an operation of the accelerator grip 11.

In the above-described embodiment, the vehicle speed control performed by the motorcycle 1 is speed limit control for regulating the vehicle speed V such that the vehicle speed V does not exceed an upper limit (= the set vehicle speed Vs). The vehicle speed controller 32 is configured to calculate the limit torque Tm such that the vehicle speed V is equal to or less than the set vehicle speed Vs. However, the vehicle speed control performed by the motorcycle is not limited to speed limit control. The vehicle speed control performed by the motorcycle 1 may be cruise control in which the motorcycle 1 travels at constant set vehicle speed Vs. The vehicle speed controller 32 may be configured to calculate the limit torque Tm such that the vehicle speed V matches the set vehicle speed Vs. As for cruise control, if on and off or the set vehicle speed is changed during traveling, depending on the vehicle state, the output torque of the engine 5 is rapidly changed, and there is a probability that the riding feeling is deteriorated. Therefore, for cruise control, the above-described torque change reducing control may be performed. The vehicle speed control that at least prevents the vehicle speed from exceeding the set vehicle speed includes not only speed limit control but also cruise control.

DESCRIPTION OF REFERENCE CHARACTERS

1 Motorcycle, 2 Front wheel, 3 Rear wheel, 4 Vehicle body, 5 Internal combustion engine (driving source), 11 Accelerator grip (accelerator operator), 18 Transmission, 18A Driving member, 18B Driven member, 21 Accelerator sensor (accelerator detector), 22 Vehicle speed sensor (vehicle speed detector), 25 Gear position sensor (deceleration rate detector), 26 Bank angle sensor (lean state detector), 31 Driving source controller, 32 Vehicle speed controller, 33 Torque change reducer, 311 Rider request torque calculator, 312 Target torque calculator, 313 Driving controller, 321 Memory, 322 Limit torque calculator, 323 Deviation calculator, 331 Limit value setter, 332 Limit torque adjuster

**Claims**

1.  A motorcycle (1) comprising:

    a front wheel (2);
    a rear wheel (3);
    a vehicle body (4) supported by the front wheel (2) and the rear wheel (3);
    a driving source (5) supported by the vehicle body (4) and configured to output a torque that drives the rear wheel (3);
    an accelerator operator (11) that is operated by a rider;
    an accelerator detector (21) configured to detect an operation amount of the accelerator operator (11);
    a vehicle speed detector (22) configured to detect vehicle speed (V);
    a driving source controller (31) configured to control the driving source (5) such that an output torque of the driving source (5) becomes a target torque (Tt);
    a vehicle speed controller (32) configured to perform vehicle speed control that at least prevents the vehicle speed (V) from exceeding set vehicle speed (Vs); and
    a torque change reducer (33) configured to reduce a change of the output torque of the driving source (5),

    wherein the vehicle speed controller (32) includes a memory (321) that stores the set vehicle speed (Vs), a deviation calculator (323) configured to calculate a deviation (ΔV) from the set vehicle speed (Vs) of the vehicle speed (V) detected by the vehicle speed detector (22), and a limit torque calculator (322) configured to calculate a limit torque (Tm), based on the deviation (ΔV);
    the driving source controller (31) includes a rider request torque calculator (311) configured to calculate a rider request torque (Tr), based on the operation amount of the accelerator operator (11) and a target torque calculator (312) configured to receive an adjusted limit torque (Tf) from a limit torque adjuster (332) and calculate the target torque (Tt), based on the adjusted limit torque (Tf) and the rider request torque (Tr);
    wherein said torque change reducer (33) is configured to reduce a change of the output torque of the driving source (5) when the vehicle speed control is turned on or off or the set vehicle speed (Vs) is changed during travelling;
    wherein the torque change reducer (33) includes a limit value setter (331) configured to set a limit value (Ta) of a change amount of the limit torque (Tm) in accordance with a vehicle state and wherein the limit torque adjuster (332) is configured to receive the limit torque (Tm) from the limit torque calculator (322) and adjust the limit torque (Tm) such that the change amount of the limit torque (Tm) does not exceed the limit value (Ta),

    the motorcycle (1) further comprising:

    a transmission (18) including a driving member (18A) connected to the driving source (5) and a driven member (18B) connected to the rear wheel (3) and configured to change a deceleration rate of the driving member (18A) and the driven member (18B); and
    a deceleration rate detector (25) configured to detect a deceleration rate of the transmission (18),
    wherein the limit value setter (331) is configured to set the limit value (Ta) in accordance with the deceleration rate of the transmission (18), and
    the limit value setter (331) is configured to
    set a first limit value as the limit value if the deceleration rate of the transmission (18) is a first deceleration rate, and
    set a second limit value that is smaller than the first limit value as the limit value if the deceleration rate of the transmission (18) is a second deceleration rate that is higher than the first deceleration rate.

2.  The motorcycle (1) according to claim 1,
    wherein the target torque calculator (312) is configured to, if the vehicle speed control is turned on or if the set vehicle speed (Vs) is changed to be lower during traveling, set the rider request torque (Tr) to the target torque when the adjusted limit torque (Tf) is larger than the rider request torque (Tr) and set the adjusted limit torque (Tf) to the target torque when the adjusted limit torque (Tf) is equal to or less than the rider request torque (Tr).

3.  The motorcycle (1) according to claim 1 or 2,
    wherein the target torque calculator (312) is configured to, if the vehicle speed control is turned off or if the set vehicle speed (Vs) is changed to be higher during traveling, set the adjusted limit torque (Tf) to the target torque when the adjusted limit torque (Tf) is smaller than the rider request torque (Tr) and set the rider request torque (Tr) to the target torque when the adjusted limit torque (Tf) is equal to or more than the rider request torque (Tf).

4. The motorcycle (1) according to any one of claims 1 to 3, further comprising:

a lean state detector (26) configured to detect a lean parameter related to a lean state of the vehicle body (4), wherein the limit value setter (331) is configured to set the limit value (Ta) in accordance with a value of the lean parameter.

5. The motorcycle (1) according to claim 4, wherein

the lean parameter is a bank angle of the vehicle body (4) or an angular velocity of the bank angle, and the limit value setter (331) is configured to
set a third limit value as the limit value (Ta) if the value of the lean parameter is a first value, and
set a fourth limit value that is smaller than the third limit value as the limit value (Ta) if the value of the lean parameter is a second value that is larger than the first value.

6. The motorcycle (1) according to any one of claims 1 to 5,
wherein the vehicle speed controller (32) is configured to calculate the limit torque (Tm) such that the vehicle speed (V) is equal to or less than the set vehicle speed (Vs).

7. The motorcycle (1) according to any one of claims 1 to 5,
wherein the vehicle speed controller (32) is configured to calculate the limit torque (Tm) such that the vehicle speed (V) matches the set vehicle speed (Vs).

**Patentansprüche**

1. Motorrad (1), das umfasst:

ein Vorderrad (2);
ein Hinterrad (3);
eine Fahrzeugkarosserie (4), die von dem Vorderrad (2) und dem Hinterrad (3) getragen wird;
eine Antriebsquelle (5), die von der Fahrzeugkarosserie (4) getragen wird und so ausgeführt ist, dass sie ein Drehmoment ausgibt, das das Hinterrad (3) antreibt;
einen Gasgriff (11), der von einem Fahrer bedient wird;
einen Gasgriff-Sensor (21), der so ausgeführt ist, dass er einen Betrag von Betätigung des Gasgriffs (11) erfasst;
einen Fahrzeuggeschwindigkeits-Sensor (22), der so ausgeführt ist, dass er Fahrzeuggeschwindigkeit (V) erfasst;
eine Antriebsquellen-Steuerungseinrichtung (31), die so ausgeführt ist, dass sie die Antriebsquelle (5) so steuert, dass ein Ausgangs-Drehmoment der Antriebsquelle (5) ein Ziel-Drehmoment (Tt) wird;
eine Fahrzeuggeschwindigkeits-Steuerungseinrichtung (32), die so ausgeführt ist, dass sie Fahrzeuggeschwindigkeits-Steuerung durchführt, die wenigstens verhindert, dass die Fahrzeuggeschwindigkeit (V) Soll-Fahrzeuggeschwindigkeit (Vs) überschreitet; und
eine Einrichtung (33) zum Reduzieren von Drehmomentänderung, die so ausgeführt ist, dass sie eine Änderung des Ausgangs-Drehmomentes der Antriebsquelle (5) reduziert,

wobei die Fahrzeuggeschwindigkeits-Steuerungseinrichtung (32) einen Speicher (321), der die Soll-Fahrzeuggeschwindigkeit (Vs) speichert, eine Einrichtung (323) zum Berechnen von Abweichung, die so ausgeführt ist, dass sie eine Abweichung ($\Delta V$) der von dem Fahrzeuggeschwindigkeits-Sensor (22) erfassten Fahrzeuggeschwindigkeit (V) von der Soll-Fahrzeuggeschwindigkeit (Vs) berechnet, sowie eine Einrichtung (322) zum Berechnen von Grenz-Drehmoment enthält, die so ausgeführt ist, dass sie ein Grenz-Drehmoment (Tm) auf Basis der Abweichung ($\Delta V$) berechnet;
die Antriebsquellen-Steuerungseinrichtung (31) eine Einrichtung (311) zum Berechnen eines von einem Fahrer angeforderten Drehmomentes, die so ausgeführt ist, dass sie ein von einem Fahrer angefordertes Drehmoment (Tr) auf Basis des Betrages von Betätigung des Gasgriffs (11) berechnet, sowie eine Einrichtung (312) zum Berechnen eines Ziel-Drehmomentes, die so ausgeführt ist, dass sie ein angepasstes Grenz-Drehmoment (Tf) von einer Einrichtung (332) zum Anpassen von Grenz-Drehmoment empfängt und das Ziel-Drehmoment (Tt) auf Basis des angepassten Grenz-Drehmomentes (Tf) sowie des von einem Fahrer angeforderten Drehmomentes (Tr) berechnet;

wobei die Einrichtung (33) zum Reduzieren von Drehmomentänderung so ausgeführt ist, dass sie eine Änderung des Ausgangs-Drehmomentes der Antriebsquelle (5) reduziert, wenn die Fahrzeuggeschwindigkeits-Steuerung an- oder abgeschaltet wird oder die Soll-Fahrzeuggeschwindigkeit (Vs) beim Fahren geändert wird;

die Einrichtung (33) zum Reduzieren von Drehmomentänderung eine Einrichtung (331) zum Einstellen eines Grenzwertes enthält, die so ausgeführt ist, dass sie einen Grenzwert (Ta) eines Betrages von Änderung des Grenz-Drehmomentes (Tm) entsprechend einem Fahrzeug-Status einstellt, und

wobei die Einrichtung (332) zum Anpassen von Grenz-Drehmoment so ausgeführt ist, dass sie das Grenz-Drehmoment von der Einrichtung (322) zum Berechnen von Grenz-Drehmoment (Tm) empfängt und das Grenz-Drehmoment (Tm) so anpasst, dass der Betrag von Änderung des Grenz-Drehmomentes (Tm) den Grenzwert (Ta) nicht überschreitet,

und wobei das Motorrad (1) des Weiteren umfasst:

ein Getriebe (18), das ein antreibendes Element (18A), das mit der Antriebsquelle (5) verbunden ist, sowie ein angetriebenes Element (18B) enthält, das mit dem Hinterrad (3) verbunden und so ausgeführt ist, dass es eine Verlangsamungsrate des antreibenden Elementes (18A) und des angetriebenen Elementes (18B) ändert; sowie

einen Verlangsamungsraten-Sensor (25), der so ausgeführt ist, dass er eine Verlangsamungsrate des Getriebes (18) erfasst,

wobei die Einrichtung (331) zum Einstellen eines Grenzwertes so ausgeführt ist, dass sie den Grenzwert (Ta) entsprechend der Verlangsamungsrate des Getriebes (18) einstellt, und

die Einrichtung (331) zum Einstellen eines Grenzwertes ausgeführt ist zum:

Einstellen eines ersten Grenzwertes als den Grenzwert, wenn die Verlangsamungsrate des Getriebes (18) eine erste Verlangsamungsrate ist, sowie

Einstellen eines zweiten Grenzwertes, der kleiner ist als der erste Grenzwert, als den Grenzwert, wenn die Verlangsamungsrate des Getriebes (18) eine zweite Verlangsamungsrate ist, die höher ist als die erste Verlangsamungsrate.

**2.** Motorrad (1) nach Anspruch 1,

wobei die Einrichtung (312) zum Berechnen eines Ziel-Drehmomentes so ausgeführt ist, dass sie, wenn die Fahrzeuggeschwindigkeits-Steuerung angeschaltet ist oder wenn die Soll-Fahrzeuggeschwindigkeit (Vs) beim Fahren so geändert wird, dass sie niedriger ist, das von einem Fahrer angeforderte Drehmoment (Tr) auf das Ziel-Drehmoment einstellt, wenn das angepasste Grenz-Drehmoment (Tf) stärker ist als das von einem Fahrer angeforderte Drehmoment (Tr), und das angepasste Grenz-Drehmoment (Tf) auf das Ziel-Drehmoment einstellt, wenn das angepasste Grenz-Drehmoment (Tf) genauso stark ist wie oder schwächer als das von einem Fahrer angeforderte Drehmoment (Tr).

**3.** Motorrad (1) nach Anspruch 1 oder 2,

wobei die Einrichtung (312) zum Berechnen eines Ziel-Drehmomentes so ausgeführt ist, dass sie, wenn die Fahrzeuggeschwindigkeits-Steuerung ausgeschaltet ist oder wenn die Soll-Fahrzeuggeschwindigkeit (Vs) beim Fahren so geändert wird, dass sie höher ist, das angepasste Grenz-Drehmoment (Tf) auf das Ziel-Drehmoment einstellt, wenn das angepasste Grenz-Drehmoment (Tf) schwächer ist als das von einem Fahrer angeforderte Drehmoment (Tr), und das von einem Fahrer angeforderte Drehmoment (Tr) auf das Ziel-Drehmoment einstellt, wenn das angepasste Grenz-Drehmoment (Tf) genauso stark ist wie oder schwächer als das von einem Fahrer angeforderte Drehmoment (Tr).

**4.** Motorrad (1) nach einem der Ansprüche 1 bis 3, das des Weiteren umfasst:

einen Schräglagen-Sensor (26), der so ausgeführt ist, dass er einen Schräglagen-Parameter in Bezug auf einen Schräglagen-Zustand der Fahrzeugkarosserie (4) erfasst,

wobei die Einrichtung (331) zum Einstellen eines Grenzwertes so ausgeführt ist, dass sie den Grenzwert (Ta) entsprechend einem Wert des Schräglagen-Parameters einstellt.

**5.** Motorrad (1) nach Anspruch 4, wobei

der Schräglagen-Parameter ein Querneigungswinkel der Fahrzeugkarosserie (4) oder eine Winkelgeschwindigkeit des Querneigungswinkels ist, und
die Einrichtung (331) zum Einstellen eines Grenzwertes ausgeführt ist zum:

Einstellen eines dritten Grenzwertes als den Grenzwert (Ta), wenn der Wert des Schräglagen-Parameters ein erster Wert ist, und
Einstellen eines vierten Grenzwertes, der niedriger ist als der dritte Grenzwert, als den Grenzwert (Ta), wenn der Wert des Schräglagen-Parameters ein zweiter Wert ist, der größer ist als der erste Wert.

**6.** Motorrad (1) nach einem der Ansprüche 1 bis 5,
wobei die Fahrzeuggeschwindigkeits-Steuerungseinrichtung (32) so ausgeführt ist, dass sie das Grenz-Drehmoment (Tm) so berechnet, dass die Fahrzeuggeschwindigkeit (V) genauso hoch ist wie oder niedriger als die Soll-Fahrzeuggeschwindigkeit (Vs).

**7.** Motorrad (1) nach einem der Ansprüche 1 bis 5,
wobei die Fahrzeuggeschwindigkeits-Steuerungseinrichtung (32) so ausgeführt ist, dass sie das Grenz-Drehmoment (Tm) so berechnet, dass die Fahrzeuggeschwindigkeit (V) der Soll-Fahrzeuggeschwindigkeit (Vs) entspricht.

**Revendications**

**1.** Moto (1) comprenant :

une roue avant (2) ;
une roue arrière (3) ;
un cadre de véhicule (4) soutenu par la roue avant (2) et la roue arrière (3) ;
une source d'entraînement (5) soutenue par le cadre de véhicule (4) et configurée pour produire en sortie un couple qui entraîne la roue arrière (3) ;
un actionneur d'accélérateur (11) qui est actionné par un conducteur ;
un détecteur d'accélérateur (21) configuré pour détecter une quantité de fonctionnement de l'actionneur d'accélérateur (11) ;
un détecteur de vitesse de véhicule (22) configuré pour détecter une vitesse de véhicule (V) ;
un contrôleur de source d'entraînement (31) configuré pour contrôler la source d'entraînement (5) de sorte qu'un couple produit en sortie de la source d'entraînement (5) devienne un couple cible (Tt) ;
un contrôleur de vitesse de véhicule (32) configuré pour exécuter un contrôle de vitesse de véhicule qui au moins empêche la vitesse de véhicule (V) de dépasser une vitesse de véhicule définie (Vs) ; et
un réducteur de changement de couple (33) configuré pour réduire un changement du couple produit en sortie de la source d'entraînement (5),

dans laquelle le contrôleur de vitesse de véhicule (32) inclut une mémoire (321) qui stocke la vitesse de véhicule définie (Vs), un calculateur de dérive (323) configuré pour calculer une dérive ($\Delta$V) depuis la vitesse de véhicule définie (Vs) de la vitesse de véhicule (V) détectée par le détecteur de vitesse de véhicule (22), et un calculateur de couple de limite (322) configuré pour calculer un couple de limite (Tm), selon la dérive ($\Delta$V) ;
le contrôleur de source d'entraînement (31) inclut un calculateur de couple de demande de conducteur (311) configuré pour calculer un couple de demande de conducteur (Tr), selon la quantité de fonctionnement de l'actionneur d'accélérateur (11) et un calculateur de couple cible (312) configuré pour recevoir un couple de limite ajusté (Tf) d'un ajusteur de couple de limite (332) et calculer le couple cible (Tt), selon le couple de limite ajusté (Tf) et le couple de demande de conducteur (Tr) ;
dans laquelle ledit réducteur de changement de couple (33) est configuré pour réduire un changement du couple produit en sortie de la source d'entraînement (5) lorsque la commande de vitesse de véhicule est activée ou désactivée, ou la vitesse de véhicule définie (Vs) est changée en cours de déplacement ;
dans laquelle le réducteur de changement de couple (33) inclut un module de définition de valeur de limite (331) configuré pour définir une valeur de limite (Ta) d'une quantité de changement du couple de limite (Tm) conformément à un état de véhicule et dans laquelle l'ajusteur de couple de limite (332) est configuré pour recevoir le couple de limite (Tm) du calculateur de couple de limite (322) et ajuster le couple de limite (Tm) de sorte que la quantité de changement du couple de limite (Tm) ne dépasse pas la valeur de limite (Ta), la moto (1) comprenant en outre :

une transmission (18) incluant un élément d'entraînement (18A) connecté à la source d'entraînement (5) et un élément entraîné (18B) connecté à la roue arrière (3) et configuré pour changer un taux de décélération de l'élément d'entraînement (18A) et de l'élément entraîné (18B) ; et
un détecteur de taux de décélération (25) configuré pour détecter un taux de décélération de la transmission (18),

dans laquelle le module de définition de valeur de limite (331) est configuré pour définir la valeur de limite (Ta) conformément au taux de décélération de la transmission (18), et
le module de définition de valeur de limite (331) est configurée pour

définir une première valeur de limite comme la valeur de limite si le taux de décélération de la transmission (18) est un premier taux de décélération, et
définir une deuxième valeur de limite qui est inférieure à la première valeur de limite comme la valeur de limite si le taux de décélération de la transmission (18) est un deuxième taux de décélération qui est supérieur au premier taux de décélération.

**2.** La moto (1) selon la revendication 1,
dans laquelle le calculateur de couple cible (312) est configuré pour, si la commande de vitesse de véhicule est activée ou si la vitesse de véhicule définie (Vs) est changée pour être inférieure en cours de déplacement, définir le couple de demande de conducteur (Tr) sur le couple cible lorsque le couple de limite ajusté (Tf) est supérieur au couple de demande de conducteur (Tr) et définir le couple de limite ajusté (Tf) sur le couple cible lorsque le couple de limite ajusté (Tf) est inférieur ou égal au couple de demande de conducteur (Tr).

**3.** La moto (1) selon la revendication 1 ou 2,
dans laquelle le calculateur de couple cible (312) est configuré pour, si la commande de vitesse de véhicule est désactivée ou si la vitesse de véhicule définie (Vs) est changée pour être supérieure en cours de déplacement, définir le couple de limite ajusté (Tf) sur le couple cible lorsque le couple de limite ajusté (Tf) est inférieur au couple de demande de conducteur (Tr) et définir le couple de demande de conducteur (Tr) sur le couple cible lorsque le couple de limite ajusté (Tf) est supérieur ou égal au couple de demande de conducteur (Tr) .

**4.** La moto (1) selon l'une quelconque des revendications 1 à 3, comprenant en outre :

un détecteur d'état d'inclinaison (26) configuré pour détecter un paramètre d'inclinaison lié à un état d'inclinaison du cadre de véhicule (4),
dans laquelle le module de définition de valeur de limite (331) est configuré pour définir la valeur de limite (Ta) conformément à une valeur du paramètre d'inclinaison.

**5.** La moto (1) selon la revendication 4, dans laquelle

le paramètre d'inclinaison est un angle latéral du cadre de véhicule (4) ou une vélocité angulaire de l'angle latéral, et
le module de définition de valeur de limite (331) est configurée pour
définir une troisième valeur de limite comme la valeur de limite (Ta) si la valeur du paramètre d'inclinaison est une première valeur, et
définir une quatrième valeur de limite qui est inférieure à la troisième valeur de limite comme la valeur de limite (Ta) si la valeur du paramètre d'inclinaison est une deuxième valeur qui est supérieure à la première valeur.

**6.** La moto (1) selon l'une quelconque des revendications 1 à 5,
dans laquelle le contrôleur de vitesse de véhicule (32) est configuré pour calculer le couple de limite (Tm) de sorte que la vitesse de véhicule (V) soit inférieure ou égale à la vitesse de véhicule définie (Vs).

**7.** La moto (1) selon l'une quelconque des revendications 1 à 5,
dans laquelle le contrôleur de vitesse de véhicule (32) est configuré pour calculer le couple de limite (Tm) de sorte que la vitesse de véhicule (V) corresponde à la vitesse de véhicule définie (Vs).

FIG.1

EP 3 974 273 B1

**FIG.2**

# FIG.3

## FIG.4

```
21 ── ACCELERATOR          ──→ ┌──────┐ ──→ IGNITION DEVICE   15
        SENSOR                 │      │
                               │      │
22 ── VEHICLE             ──→  │      │ ──→ FUEL INJECTOR      16
        SPEED SENSOR           │      │
                               │      │
23 ── ROTATION            ──→  │      │ ──→ ELECTRIC           17
        SPEED SENSOR           │      │     THROTTLE VALVE
                               │      │
24 ── THROTTLE            ──→  │  30  │
        SENSOR                 │      │
                               │ ECU  │
25 ── GEAR POSITION       ──→  │      │
        SENSOR                 │      │
                               │      │
26 ── BANK ANGLE          ──→  │      │
        SENSOR                 │      │
                               │      │
41 ── SELECTION           ──→  │      │
        SWITCH                 │      │
                               │      │
42 ── SET SWITCH          ──→  │      │
                               │      │
43 ── UP SWITCH           ──→  │      │
                               │      │
44 ── DOWN SWITCH         ──→  └──────┘
```

## FIG.5

32(VEHICLE SPEED CONTROLLER)

| | 323 | 322 |

321 — MEMORY → Vs → DEVIATION CALCULATOR → ΔV → LIMIT TORQUE CALCULATOR

22 — VEHICLE SPEED SENSOR → V

33(TORQUE CHANGE REDUCER)

331 | 332

Tm

25 — GEAR POSITION SENSOR →
26 — BANK ANGLE SENSOR →
LIMIT VALUE SETTER → Ta → LIMIT TORQUE ADJUSTER

Tf

21 — ACCELERATOR SENSOR → RIDER REQUEST TORQUE CALCULATOR → Tr → TARGET TORQUE CALCULATOR → Tt → DRIVING CONTROLLER → 5 ENGINE

311 | 312 | 313

31(DRIVING SOURCE CONTROLLER)

EP 3 974 273 B1

FIG.6

FIG.7

*FIG.8*

*FIG.9*

FIG.10

FIG.11

SPEED LIMIT CONTROL

FIG.12A

FIG.12B

FIG.12C

*FIG.13*

*FIG.14*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007100639 A
- US 2020207205 A
- DE 102015220658 A
- EP 2857301 A
- US 2012067122 A